Europäisches Patentamt

European Patent Office

Office européen des brevets

(19)

(11) **EP 0 873 784 B1**

(12) **FASCICULE DE BREVET EUROPEEN**

(45) Date de publication et mention
de la délivrance du brevet:
**10.07.2002 Bulletin 2002/28**

(51) Int Cl.⁷: **B01J 23/96**, B01J 38/20,
B01J 38/12, B01J 38/14,
C10G 35/12

(21) Numéro de dépôt: **98400845.8**

(22) Date de dépôt: **07.04.1998**

(54) **Procédé et enceinte pour la régénération d'un catalyseur incluant un contrôle de la fin de la combustion**

Verfahren und Gehäuse für die Regenerierung eines Katalysators mit Kontrolle des Endes des Verbrennungsprozesses

Catalyst regeneration enclosure and process comprising a control of the end of the combustion

(84) Etats contractants désignés:
**BE DE ES GB IT NL**

(30) Priorité: **14.04.1997 FR 9704659**
**14.04.1997 FR 9704661**

(43) Date de publication de la demande:
**28.10.1998 Bulletin 1998/44**

(73) Titulaire: **INSTITUT FRANCAIS DU PETROLE**
**92500 Rueil Malmaison (FR)**

(72) Inventeurs:
• **Brunet, François-Xavier**
**69390 Vernaison (FR)**

• **Bromet, Emmanuelle**
**92500 Rueil Malmaison (FR)**
• **Deves, Jean-Marie**
**78540 Vernouillet (FR)**
• **Humeau, Dominique**
**38200 Vienne (FR)**
• **Sanchez, Eric**
**92500 Rueil Malmaison (FR)**

(56) Documents cités:
EP-A- 0 258 137    EP-A- 0 378 482
FR-A- 2 642 330    US-A- 4 578 370
US-A- 4 872 970    US-A- 5 053 371

**Description**

L'invention concerne les procédés de régénération des catalyseurs usés destinée à leur rendre leurs performances catalytiques initiales. Elle concerne plus particulièrement l'étape de combustion.

Elle s'applique particulièrement bien aux catalyseurs pour la production d'aromatiques, et notamment le reformage. Elle est très avantageuse pour les régénérations avec des lits mobiles de catalyseur.

Les catalyseurs de production d'aromatiques, ou de reformage, comprennent généralement un support (par exemple formé d'au moins un oxyde réfractaire, le support peut également inclure une ou plusieurs zéolithes), au moins un métal noble (le platine de préférence), au moins un métal promoteur (par exemple l'étain ou le rhénium), au moins un halogène et éventuellement un ou plusieurs éléments additionnels (tels que alcalins, alcalino-terreux, lanthanides, silicium, éléments du groupe IV B, métaux non nobles, éléments du groupe III A, etc.). Les catalyseurs de ce type contiennent, par exemple, du platine et au moins un autre métal déposés sur un support alumine chlorée. D'une manière générale, ces catalyseurs sont utilisés pour la conversion d'hydrocarbures naphténiques ou paraffiniques susceptibles de se transformer par déshydrocyclisation et/ou déshydrogénation ; dans le reformage ou pour la production d'hydrocarbures aromatiques (par exemple production de benzène, toluène, ortho-, méta- ou paraxylènes). Ces hydrocarbures proviennent du fractionnement des pétroles bruts par distillation ou d'autres procédés de transformation.

Ces catalyseurs sont largement décrits dans la littérature.

Leur régénération est également bien connue. Elle se déroule en lit fixe ou mobile, avec une étape de combustion dans une ou plusieurs zones de combustion, puis une étape d'oxychloration, suivie d'une étape de calcination. Le brevet EP-A-378 482 de la demanderesse décrit un tel procédé en lit mobile.

Pour faciliter la compréhension, le procédé selon l'invention sera décrit à partir de la régénération en lit mobile des catalyseurs de reformage. Il convient donc d'abord de se référer à l'art antérieur du brevet EP-A-378 482.

Selon le brevet EP-A-378 482, le catalyseur usé chemine progressivement de haut en bas dans une enceinte de régénération où il rencontre successivement une première zone à lit mobile et radiale de combustion, une deuxième zone à lit mobile et radiale de combustion, une zone à lit mobile axiale d' oxychloration et une zone à lit mobile axiale de calcination, et :

a) dans la première zone de combustion, le catalyseur est traité sous une pression de 3 à 8 bars sensiblement égale à celle qui règne dans le premier réacteur de réformage, à une température comprise entre 350 et 450 °C par un gaz de combustion à base d'un gaz inerte circulant radialement et a co-courant du catalyseur, renfermant 0,01 à 1 % d'oxygène en volume, ce gaz de combustion provenant d'une zone de lavage des gaz issus de la calcination, de l'oxychloration et de la combustion.

b) dans la deuxième zone de combustion, le catalyseur est traité sous une pression de 3 à 8 bars sensiblement égale à celle qui règne dans ledit premier réacteur à une température supérieure d'au moins 20 °C à la température qui règne dans la première zone de combustion, en présence des gaz en provenance de la première zone de combustion et en présence d'un gaz inerte d'appoint auquel on ajoute jusqu'à 20 % en volume d'oxygène de façon à ce que le catalyseur soit au contact d'un gaz renfermant 0,01 à 1 % d'oxygène en volume, ces gaz circulant radialement et a co-courant du catalyseur.

Le catalyseur est ensuite envoyé dans la zone d'oxychloration.

Or, la demanderesse a pu constater, lors de l'exploitation de ce procédé de régénération, qu'il est important que la combustion soit terminée (complète) avant de passer en oxychloration (ou dans toute autre étape suivante). Si elle ne l'est pas, il faut pouvoir modifier les conditions de la combustion pour l'obtenir.

En conséquence, la demanderesse a mis au point un procédé de régénération d'un catalyseur, procédé incluant une zone de contrôle de la fin de la combustion, avant toute étape subséquente, et disposant de moyens pour contrôler ladite fin de combustion.

Le déposant connaît un brevet US-4 578 370 disposant d'une zone d'ajustement de température, après l'étape de combustion et avant l'oxychloration dans un procédé de régénération d'un catalyseur de reformage.

Dans ce procédé, le gaz amené dans la zone de combustion circule radialement dans le lit de catalyseur, et l'oxygène de la combustion provient essentiellement de la zone de calcination située dans le bas de la zone de régénération, après la zone de combustion.

La zone d'ajustement de température a pour fonction de modifier la température du catalyseur sortant de la zone de combustion pour l'amener à une température proche de celle de la zone d'oxychloration, dans le but de réduire le choc thermique subi par le catalyseur lors de son entrée dans la zone d'oxychloration.

Pour ce faire, un gaz est injecté dans la zone d'ajustement de température, ce gaz est une partie comprimée de l'effluent issu de la combustion.

Ce gaz est à la température de l'effluent comprimé issu de la combustion. Il n'a subi ni refroidissement ni réchauffement puisque l'un des objectifs de ce procédé est de ne pas utiliser de moyens de chauffage, et de façon générale de réduire les équipements.

Le gaz entrant dans la zone d'ajustement de température se mélange à sa sortie du lit, aux gaz provenant de l'oxychloration et remonte en se mélangeant aux fumées de combustion jusqu'en tête de l'enceinte de régénération où il est soutiré.

En traversant la zone d'ajustement de température, le gaz réchauffe le catalyseur.

La présente demande de brevet propose un procédé incluant une zone située après que la combustion ait été effectuée, mais cette zone permettant de résoudre un problème différent (le contrôle de la fin de la combustion) par des moyens non mis en oeuvre dans le brevet US-4 578 370.

Plus précisément, la présente invention concerne un procédé de régénération d'un catalyseur usé incluant une combustion de la matière carbonée, en au moins une étape de combustion dans laquelle le catalyseur est mis au contact d'au moins un gaz contenant de l'oxygène, dans des conditions opératoires déterminées, procédé dans lequel le catalyseur ayant subi toutes les étapes de combustion est, dans une étape de contrôle, mis au contact d'au moins un gaz dit de contrôle contenant de l'oxygène dans des conditions plus sévères que celles des étapes de combustion, et que l'étape de contrôle se déroule avec une consommation en oxygène inférieure à 10 % de l'oxygène entrant avec ledit gaz et en ce que les températures du gaz et/ou du catalyseur introduit et du gaz et/ou du catalyseur sortant dans l'étape de contrôle et/ou les teneurs en oxygène du gaz introduit et du gaz sortant dans l'étape de contrôle sont mesurées, comparées, et s'il existe une différence supérieure aux variations admissibles, au moins une condition opératoire d'au moins une étape de combustion est modifiée de façon à corriger ladite différence.

La sévérité des conditions dans la zone de contrôle est obtenue en introduisant par le gaz de contrôle une quantité d'oxygène au moins égale à la quantité d'oxygène la plus grande introduite dans une étape de combustion et/ou en introduisant le gaz de contrôle à une température supérieure à celle des gaz introduits en combustion. Le premier moyen est préféré.

Avantageusement, l'étape de contrôle se déroule à une température sensiblement constante.

Par "température sensiblement constante" on entend une température ne variant pas de plus de 3 % et de préférence pas de plus de 2 %, aux erreurs de mesure près et aux déperditions thermiques près.

Avantageusement, la température du gaz de contrôle introduit est au moins égale à la température la plus élevée du (des) gaz introduit(s) dans l'étape de combustion. De préférence, elle est supérieure.

De préférence, la température est de l'ordre de grandeur de la température des gaz et/ou du catalyseur sortant de la dernière zone de combustion.

Pour ce faire, le contrôle est fait avantageusement, après passage sur le catalyseur, au niveau du gaz de contrôle qui sort du procédé indépendamment des autres gaz issus de l'étape de combustion. Il peut être également aisément réalisé sur un gaz de contrôle sortant en mélange avec au moins un gaz issu d'au moins une étape de combustion.

Le catalyseur usé est régénéré par exemple en lit fixe ou en lit mobile avec écoulement continu ou intermittent.

L'invention est illustrée sur les figures ci-incluses qui représentent :

- figure 1 : une zone de contrôle incluse dans la dernière zone de combustion avec un lit mobile de catalyseur.
- figure 2 : une zone de contrôle après une étape de combustion, avec un lit mobile de catalyseur.
- figure 3 : position du front de flamme.
- figure 4 : mesure de la position du front de flamme.

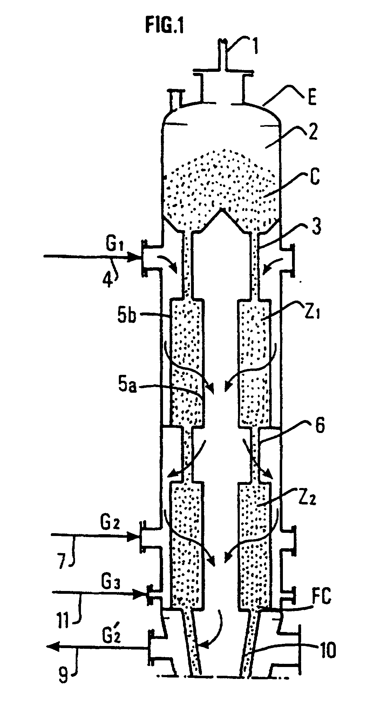

La figure 1 ne représente que la combustion du procédé de régénération, qui se déroule ici en deux étapes dans deux zones distinctes, selon par exemple le procédé décrit dans EP-378 482. De façon connue, le catalyseur C usé à régénérer entre dans le sommet (2) de l'enceinte E de régénération par la conduite (1).

Le catalyseur est introduit ensuite par une ou plusieurs conduites (3) (par exemple jambes) dans une première zone de combustion Z1. Dans cette zone, le catalyseur subit un premier brûlage ou combustion à l'aide d'un gaz G1 contenant de l'oxygène introduit par la conduite (4) qui traverse les parois (5a) et (5b), des grilles par exemple, entre lesquelles est contenu le catalyseur.

De façon générale, les zones de combustion sont de type radial, et de préférence annulaire dans le cas du lit mobile montrées figure 1.

Dans le cas du lit mobile de catalyseur, l'écoulement est continu. Des écoulements intermittents peuvent également être envisagés.

Le catalyseur C descend ensuite par une ou plusieurs conduites (6) (par exemple jambes) dans la seconde zone de combustion Z2, dans laquelle il est introduit par une tubulure (7) un gaz G2 contenant de l'oxygène.

Le gaz G'2 après passage dans cette seconde zone de combustion est extrait de ladite zone par la conduite (9). Le catalyseur C descend alors ensuite par les conduites (10) (par exemple jambes) vers la zone d'oxychloration non représentée ici. Il est traité après la combustion de façon connue pour assurer sa régénération (oxychloration, calcination).

On a représenté sur la figure 1, deux zones de combustion successives, le nombre de zones de combustion est choisi par l'homme du métier en fonction de l'installation à concevoir. Elles fonctionnent et sont agencées de la même façon que les zones décrites ci-dessus.

Certains procédés (tels que décrit dans le brevet US-4 578 370) fonctionnent avec une seule zone de combustion dans laquelle il entre un ou plusieurs flux gazeux contenant de l'oxygène en un ou plusieurs points.

L'invention s'applique quel que soit le nombre de zones de combustion, il suffit qu'il y en ait une. Par exemple, les gaz circulent radialement à l'écoulement du catalyseur (tel que représenté sur les figures par exemple).

Selon la figure 1, le procédé de régénération comporte donc deux étapes de combustion, et, immédiatement avant sa sortie de la combustion et avant de pénétrer dans les zones de traitement ultérieures, le catalyseur est soumis à une étape de contrôle.

Cette opération est effectuée dans la partie inférieure (dans le sens de l'écoulement du catalyseur) de la dernière zone de combustion Z2, dans cette partie inférieure est située alors une zone FC dite de contrôle de fin de la combustion. En fonctionnement normal, il ne se déroule pas de combustion dans cette partie inférieure, en d'autres termes, elle est située après la fin du front de combustion (front de flamme).

D'une façon générale, la zone de contrôle FC est alors située dans la moitié inférieure de la dernière zone de combustion, et mieux dans le tiers inférieur. On aura intérêt à réduire la zone de contrôle par rapport à la zone de combustion ; ainsi une zone de contrôle située dans les 20 % inférieurs de la zone de combustion, ou mieux les 15 % convient. On fait donc le contrôle au-delà de la fin de front de flamme qui se situe jusqu'à au plus 98 %, voire 95 % ou au plus 80 % de la hauteur de la zone de combustion.

Donc, ainsi qu'illustré figure 1, le catalyseur est soumis à au moins une étape de combustion se déroulant dans au moins une zone de combustion, dans laquelle est introduit au moins un gaz contenant de l'oxygène, et le catalyseur est soumis à une étape de contrôle de la fin de la combustion dans une zone de contrôle qui se situe dans la partie inférieure de la dernière zone de combustion, le gaz de contrôle étant introduit au niveau de la zone de contrôle. La mesure de la température et/ou de la teneur en oxygène sont effectuées de préférence sur le gaz sortant au niveau de ladite zone mais, on peut également mesurer la température qui règne dans le lit mobile de catalyseur ou la température du catalyseur.

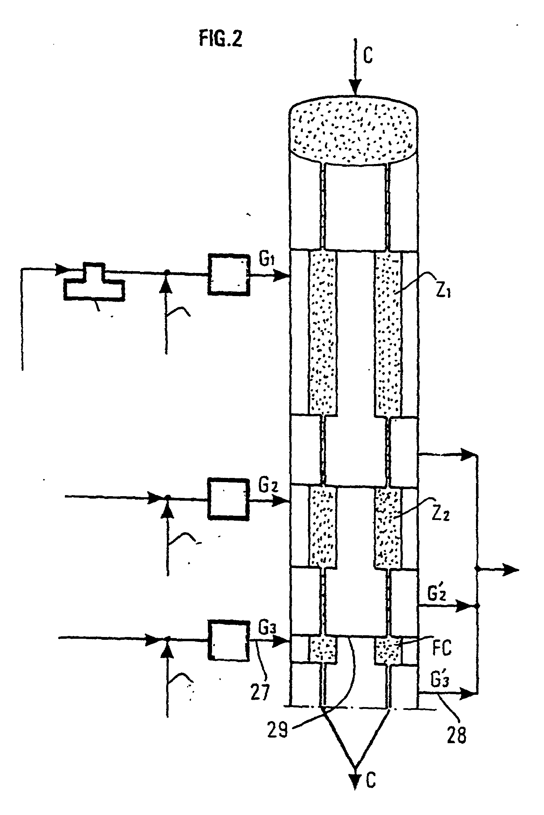

Dans la réalisation représentée figure 2, la zone FC de contrôle est une zone non incluse dans la dernière zone de combustion Z2, mais séparée d'elle.

La séparation entre la zone FC et la zone de combustion ou la dernière zone de combustion a pour fonction d'empêcher le passage des gaz entre ces zones mais de permettre le passage du catalyseur. L'homme de métier choisira les moyens adaptés, par exemple une plaque (29) selon la figure 2.

Les zones de combustion peuvent être séparées (voir figure 2) ou non séparées (figure 1).

Il entre dans la zone FC un gaz G3 contenant de l'oxygène par la conduite (11) selon la figure 1 (et (27) selon la figure 2), gaz qui est extrait après son passage à travers la zone FC par une conduite (9) selon la figure 1 par laquelle s'effectue également l'évacuation du gaz G'2 ayant traversé la zone de combustion Z2 ou par la conduite (28) selon la figure 2 indépendamment de G'2 (gaz G'3).

Donc, ainsi qu'illustré figure 2, le catalyseur est soumis à au moins une étape de combustion se déroulant dans au moins une zone de combustion, dans laquelle est introduit au moins un gaz contenant de l'oxygène, et le catalyseur est soumis à une étape de contrôle de la fin de la combustion dans une zone de contrôle séparée de la zone de combustion ou de la dernière zone de combustion de manière à laisser passer le catalyseur et empêcher le passage des gaz, le gaz de contrôle étant introduit dans la zone de contrôle et extrait de ladite zone de contrôle.

Dès lors, la mesure de la température et/ou de la teneur en oxygène est effectuée de préférence sur ledit gaz extrait.

Pour réaliser la sévérisation des conditions opératoires en zone de contrôle par rapport aux zones de combustion, un moyen est que le gaz introduit pour l'étape de contrôle, au niveau de la zone FC sur les figures 1 et 2, présente une quantité d'oxygène au moins égale et de préférence supérieure à la quantité d'oxygène la plus grande introduite dans une étape de combustion.

En d'autres termes, en se reportant aux figures 1 et 2, la quantité d'oxygène entrant avec le gaz G3 est égale ou supérieure à celle entrant avec le gaz G1 et à celle pour le gaz G2. Si les débits sont égaux, la teneur en oxygène de G3 est supérieure à celle de G1 et à celle de G2.

Un autre moyen pris seul ou combiné au moyen précédent est que le gaz introduit présente également de préférence une température au moins égale à la température la plus élevée des gaz introduits dans l'étape de combustion. Elle peut être de préférence sensiblement égale à la température obtenue à la fin de la dernière étape de combustion. Dans la figure 2, le gaz G3 entre généralement à une température proche de celle à laquelle sort l'effluent G'2 de la seconde zone de combustion. Et selon la figure 1, le gaz G3 a une température généralement proche de celle G'2 de l'effluent sortant de la seconde zone de combustion incluant la zone FC. Les gaz G3 sont généralement à une température proche de celle régnant dans le lit mobile de catalyseur quittant la dernière zone de combustion.

Dans un mode de réalisation avantageux pour optimiser la gestion des gaz, on soumet l'effluent sortant G'2 à un refroidissement, un traitement d'élimination des impuretés, à une purge, une compression et de préférence à un séchage placé avant le compresseur ou après le compresseur sur tout ou partie du gaz. Le gaz est fractionné en deux parties, l'une étant recyclée en combustion et l'autre étant envoyée comme gaz G3 dans la zone FC après éventuels apports d'oxygène et éventuels réchauffages. Donc, de façon générale, le gaz G3 comprend au moins en partie du gaz issu de la dernière étape de la combustion, et de préférence en totalité, additionnée d'oxygène (étant entendu qu'il peut s'agir d'un gaz contenant de l'oxygène tel que l'air).

La zone FC de contrôle se distingue d'une zone de combustion en ce que la consommation d'oxygène est dans la zone FC inférieure à 10 % de l'oxygène entrant, avantageusement d'au plus 5 % de l'oxygène entrant. Généralement la température y demeure sensiblement constante. Ce qui signifie que la combustion est achevée.

Pour mesurer la (les) température (s) au niveau de la zone de contrôle, un moyen est de disposer par exemple un ou des thermocouples au niveau du collecteur central (défini par la paroi interne (5a) sur la figure 1) et au niveau de la zone FC. On connaît ainsi la température moyenne du gaz sortant de la zone FC, qui est alors comparée à celle du gaz entrant dans la zone FC.

Si le gaz avait circulé dans le sens opposé à celui de la figure 1, c'est-à-dire de l'intérieur (de l'espace délimité par la paroi interne) vers l'extérieur, les thermocouples seraient placés au niveau de la paroi externe (5b).

Un autre moyen est de mesurer la température régnant dans le lit catalytique ou la température du catalyseur par exemple à partir d'un thermocouple noyé dans le lit.

Tout moyen de mesure de la température convient : thermocouple, analyseur infrarouge ...

Dans le cas d'un lit mobile de catalyseur se déplaçant dans une zone unique de combustion, on opère de la même façon pour mesurer la température, en disposant le (s) moyen (s) de mesure au niveau de la paroi par laquelle sort le gaz de la zone FC.

Par contre, la mesure devient plus aisée et donc le contrôle plus fiable si les zones de combustion et de contrôle sont séparées de façon à laisser passer le catalyseur mais empêcher les gaz de passer, puisque le gaz sort de la zone FC indépendamment des autres gaz. On constate alors clairement que le brevet US-4 578 370 de l'art antérieur ne dispose pas des moyens nécessaires pour définir une zone de contrôle telle que dans l'invention.

De même, l'homme de métier choisira les moyens adaptés pour mesurer la consommation d'oxygène dans la zone FC. Par exemple, de façon simple, on peut mesurer la variation de la teneur en oxygène entre l'entrée et la sortie de la zone FC à partir d'une variation de la teneur à l'entrée (au même débit total de gaz) et la mesure de la variation de la teneur en sortie de zone. D'une façon générale, si le fonctionnement des étages (zones) précédents est correct, la consommation en oxygène dans la zone FC doit être faible (inférieure à 2-3 % par exemple).

Ce moyen de mesure convient particulièrement bien lorsque la zone FC est incluse dans la dernière zone de combustion et que la dernière zone de combustion est séparée de la zone de combustion qui la précède de façon à ce que les gaz de combustion issus de la dernière zone ne passent pas dans la zone de combustion précédente. Le moyen est également aisément applicable dans le cas de la zone FC séparée de la figure 2.

On dispose ainsi de moyens simples pour contrôler le bon fonctionnement de la combustion, et on peut remédier aux déficits de combustion en faisant varier la température ou le taux d'oxygène dans au moins une zone de combustion.

En effet, dans le procédé les températures du gaz et/ou du catalyseur introduit et du gaz et/ou du catalyseur sortant dans l'étape de contrôle et/ou les teneurs en oxygène du gaz introduit et du gaz sortant dans l'étape de contrôle sont mesurées, comparées, et s'il existe une différence supérieure aux variations admissibles, au moins une condition opératoire d'au moins une étape de combustion est modifiée de façon à corriger ladite différence.

(On décrira un peu plus loin une méthode permettant d'opérer ce contrôle de la combustion, à partir de la connaissance de l'avancement de la combustion obtenue par le repérage de la position du front de flamme.).

On comparera de préférence la température ou la teneur en oxygène des gaz introduits et sortants. Une autre comparaison possible est entre les températures du lit catalytique ou du catalyseur entrant et sortant de la zone de contrôle.

Si la différence de température n'excède pas 3 %, voire 2 % de la température du gaz entrant (en dehors des déperditions thermiques déterminables) ou si la différence de teneur en oxygène est inférieure à 10 % de la teneur en oxygène du gaz entrant (on peut si on le souhaite sévériser la contrainte à au plus 5 %), alors on considérera la réaction de combustion terminée (car la différence est dans la limite des variations admissibles).

Dans le cas contraire (différence supérieure aux variations admissibles, on laissera se dérouler une finition de la combustion (donc avec des conditions opératoires modifiées par rapport au fonctionnement normal) pour garantir la régénération convenable du catalyseur mais dans le même temps, on modifiera au moins une condition opératoire dans au moins une zone de combustion de façon à ce que la consommation d'oxygène dans la zone de contrôle reste inférieure à 10 %.

Le dysfonctionnement de la combustion sera constaté rapidement et on y remédiera dans un temps très court. Le dysfonctionnement observé sera donc bref. Il se produira à ce moment-là, dans les conditions sévères de la zone, une finition de la combustion.

Pour le traitement des catalyseurs de reformage ou de production d'aromatiques, les conditions de température du gaz entrant dans l'étape de contrôle sont de 400-550 °C, et généralement d'au moins 450 °C, et de préférence d'au moins 460 °C, et souvent de 460 °C à 480 °C voire plus. La teneur en oxygène est d'au plus 2 %, de préférence 0,5-1,5 %, et de préférence supérieure au(x) teneur (s) des gaz entrés en zone (s) de combustion.

L'invention s'applique également à un mode de régénération en lit fixe. Plusieurs lits ou un seul lit peuvent être employés, et le gaz contenant l'oxygène peut être amené en plusieurs points dans le lit ou en dehors du lit.

Le catalyseur en lit fixe est soumis à un gaz contenant de l'oxygène amené par une conduite, localisée par exemple en fond de lit et sortant par une autre conduite localisée par exemple en tête de lit après son passage sur le lit.

Les conditions régnant dans le réacteur permettent d'effectuer la combustion. Elle peut avoir lieu en une étape ou en plusieurs étapes. Par exemple, à un moment la température et/ou la teneur en oxygène du gaz peut être augmentée, et dans cette deuxième étape, la combustion est poussée.

Lorsque la dernière étape de combustion est achevée, on entre un gaz contenant de l'oxygène en quantité égale ou de préférence supérieure à la quantité d'oxygène la plus grande introduite dans une étape de combustion précédente (par exemple supérieure à celle introduite dans la deuxième étape telle que décrite ci-dessus), et le gaz étant introduit à une température au moins égale à la température la plus élevée des gaz précédemment introduits, ou avantageusement sensiblement égale à la température du gaz sortant dans la dernière étape de combustion.

On mesure la température et/ou la teneur en oxygène du gaz sortant et on compare aux températures et/ou teneur en oxygène du gaz entrant.

De la même façon que dans le procédé en lit mobile, on déterminera si la consommation en oxygène est dans les limites admissibles du procédé.

Dans le cas contraire (différence supérieure aux variations admissibles), on laissera se dérouler une finition de la combustion (donc avec des conditions opératoires modifiées par rapport au fonctionnement normal) pour garantir la régénération convenable du catalyseur, ou bien on entamera un nouveau cycle de régénération avec des conditions modifiées. Au moins une condition opératoire pour la combustion du prochain lot du même catalyseur sera alors modifiées en conséquence pour corriger la différence.

L'homme du métier adaptera les conditions de température et de teneur en oxygène du gaz entrant dans la zone de contrôle en fonction des conditions régnant dans les zones de combustion et dans les limites précisées de l'invention.

Pour les procédés de régénération, opérant avec un lit mobile de catalyseur, et notamment pour le procédé selon l'invention, on peut très avantageusement contrôler et réguler la combustion par repérage de la position du front de flamme. Une méthode pour réaliser cela est proposée ci-après.

Dans ce procédé pour le contrôle de la combustion de la matière carbonée lors de la régénération d'un catalyseur, le catalyseur s'écoule en lit mobile descendant entre au moins 2 parois dans une zone de combustion, et est traversé par un gaz chaud contenant de l'oxygène qui entre dans le lit par l'une des parois et en ressort par l'autre paroi, zone dans laquelle se développe un front de flamme à profil incliné dont le point le plus haut est au niveau de la paroi par laquelle entre le gaz et au niveau de l'entrée du catalyseur dans la zone, et dont le point le plus bas est au niveau de la paroi par laquelle sort le gaz. Le contrôle de la combustion de la matière carbonée, au niveau de l'une au moins des zones où il y a combustion, est, dans ce procédé, effectué de la façon suivante : on mesure au moins un paramètre XY de la zone où il y a combustion totale et au moins un paramètre XN de la zone où il n'y a pas de combustion, on attribue à au moins un point de référence choisi à proximité ou sur le front de flamme, à obtenir dans des conditions normales de fonctionnement, une fonction paramétrique incluant XY et XN, la localisation dudit point dans les conditions normales de fonctionnement constituant une valeur consigne de référence, et on calcule la position, à partir de points de mesure situés de part et d'autre de la valeur consigne de référence, d'un point fictif calculé à partir de la fonction paramétrique, puis on compare ladite position à la valeur consigne de référence, et, s'il existe une différence, on modifie au moins une condition opératoire de façon à réduire ou éliminer ladite différence.

On suivra la description de l'invention à partir des figures.

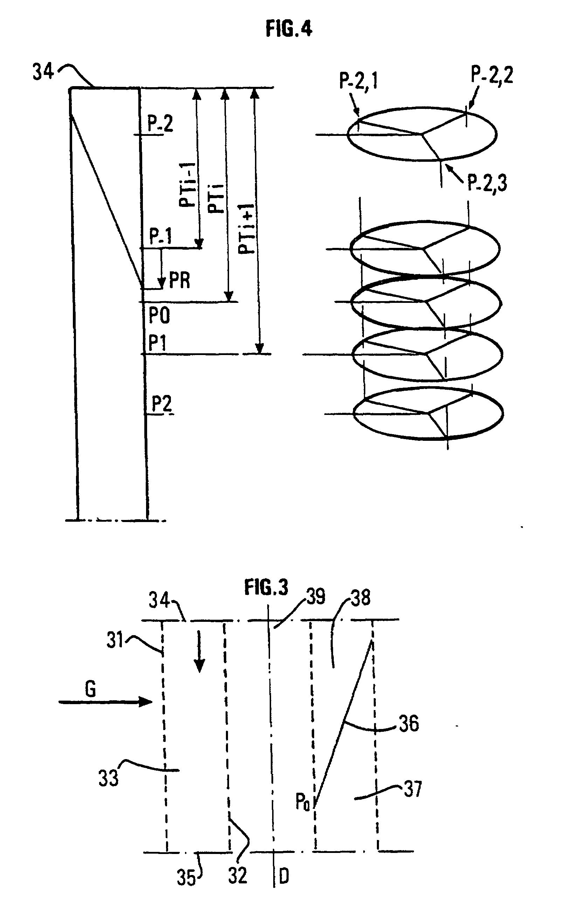

On a schématisé figure 3 en coupe longitudinale, une zone de combustion avec un lit de forme annulaire délimité par 2 parois cylindriques coaxiales, une paroi externe [31] et une paroi interne [32]. Par la paroi externe (une grille selon la figure 3) entre un gaz G contenant de l'oxygène qui traverse le lit mobile [33] de catalyseur, en écoulement descendant selon la figure 3, entrant dans la zone au niveau de l'ouverture [34] (qui constitue le haut de la zone de combustion) et sortant de la zone de combustion au niveau de l'ouverture [35].

La zone de combustion a donc une hauteur h (distance entre les ouvertures [34] et [35]. La paroi interne [32] délimite ainsi un collecteur central des gaz [39].

L'explication de l'invention est donnée ici avec un écoulement du gaz de l'extérieur vers l'intérieur, l'écoulement inverse est possible et l'invention s'applique également dans ce cas.

Il se développe dans la zone de combustion un front de flamme, c'est-à-dire une zone où se passe "rapidement" la réaction de combustion.

Le front de flamme est référencé [36] sur la figure 3. Sa forme résulte de ce que, en haut de la zone, la partie du lit située près de la paroi d'entrée des gaz brûle, et comme le catalyseur descend de façon continue, cette partie de catalyseur se retrouve un peu plus bas et l'oxygène présent à cet endroit va brûler du coke situé un peu plus loin de la paroi par laquelle entre le gaz.

Le front de flamme présente donc un profil incliné vers le bas, le point le plus haut du front est au niveau de la paroi par laquelle entre le gaz (paroi [31] selon la figure 3) et au niveau de l'entrée du catalyseur (ouverture [34] selon la figure 3), et le point le plus bas du front est au niveau de la paroi par laquelle sort le gaz (paroi [32] selon la figure 3).

Le front de flamme sépare donc le lit catalytique en 2 zones : en avant du front de flamme (zone [37]), le catalyseur n'est plus coké (ou pratiquement plus) et il est "froid", alors qu'en arrière du front de flamme (zone [38]) il est coké et "chaud".

On a pu constater que, pour être assuré que pratiquement tout le coke soit brûlé, le point le plus bas du front de flamme (correspondant à la fin de la combustion) devait se situer avant la fin de la zone de combustion.

Afin d'assurer un réel contrôle de la position de la fin du front de flamme, il faut s'autoriser une certaine souplesse sur sa position extrême, car le contrôle est une variation autour d'une consigne, et on peut s'imposer que la position la plus basse, de consigne, du front de flamme se situera avantageusement au plus à 98 % de la hauteur h à partir du haut de la zone de combustion, de préférence au plus de 95 % voire au plus de 85 % au plus 80 %. D'une façon générale, la fin du front de flamme est situé dans le tiers inférieur de la zone de combustion.

Les conditions opératoires de la zone de combustion agissent sur le front de flamme, et donc sur son point le plus bas. Ce sont la vitesse de déplacement du catalyseur donc son débit ou le débit massique de coke à brûler, la quantité d'oxygène introduite (débit du gaz entrant contenant de l'oxygène x teneur en oxygène), la température de ce gaz qui sont les paramètres les plus importants.

Les expériences et la modélisation de la réaction de combustion faites par la demanderesse montrent que montée en température et consommation de l'oxygène sont concomitantes. Des indicateurs de position du front de flamme sont donc des mesures de températures ou des mesures de consommation en oxygène (directes ou par calcul).

Connaître les profils de température, c'est donc connaître la consommation d'oxygène. Et connaître la consommation d'oxygène, c'est connaître l'avancement de la combustion du coke. Donc l'avancement de la combustion du coke est connu par les températures et/ou par la consommation de l'oxygène, ce qui revient à dire que la connaissance du front de flamme permet de savoir l'état de la combustion.

Par la suite, la localisation du point de référence (de préférence dans des conditions normales de fonctionnement, le point le plus bas du front de flamme) sera détaillée en termes de profils de températures. (On pourrait indifféremment employer des profils de consommation d'oxygène). Mais, compte tenu de la précision des mesures de température et de concentration en oxygène effectuées sur les débits de gaz entrant et sortant de la combustion, il est illusoire de chercher à localiser précisément la fin du front de flamme à partir de ces seules informations.

La méthode de localisation est expliquée ci-après, à partir du point le plus bas du front de flamme choisi comme point de référence ; elle est valable pour tout autre point appartenant au front de flamme. Le point de référence est à proximité du front de flamme ou sur le front de flamme, dans la zone où il y a une forte probabilité pour qu'il s'y développe dans des conditions normales.

L'exploitant détermine, pour un fonctionnement normal, les conditions opératoires et donc la position P0 du point le plus bas du front de flamme, et la plage de valeurs tolérées dans laquelle P0 peut varier.

Lorsque, en cours de fonctionnement ou au démarrage de l'installation on n'atteint pas ces conditions normales, le repérage du point le plus bas (ou tout autre point) du front de flamme permet de déceler ce dysfonctionnement, et de le corriger en modifiant les conditions opératoires.

On appellera, dans notre cas, valeur consigne de référence, la position du point le plus bas du front de flamme à obtenir dans des conditions normales de fonctionnement. Elle est référencée P0 sur la figure 4.

Pour repérer ladite position, on dispose de part et d'autre de P0 des points (niveaux) de mesure P-1... P-i et P1...Pi, les valeurs P-i étant au-dessus de la position de consigne P0 (vers le haut de la zone de combustion) et Pi en dessous de P0 (vers le bas de la zone de combustion).

La figure 4 montre 5 points (niveaux) de mesure P-2, P-1, P0, P1 et P2. On peut en prévoir autant que nécessaire. Leur écartement est défini par l'homme du métier en fonction de la précision qu'il souhaite obtenir sur la localisation du point le plus bas du front de flamme, de la rapidité souhaitée de la correction à apporter ; pour ce faire, il pourra s'aider de modèles de simulation et de mesures exploratoires.

Ces points de mesure sont disposés avantageusement, selon la figure 4, au niveau du collecteur central [39] puisqu'ils doivent être positionnés du côté de la paroi par laquelle sort le gaz (si l'écoulement de gaz était inverse, les points de mesure seraient du côté de la paroi externe) car le point choisi ici (bas du front de flamme) se situe à ce niveau.

L'homme du métier choisira la position des points de mesure la mieux adaptée dans son enceinte en fonction du (des) point(s) de référence choisi(s).

La figure 4 montre une disposition dans laquelle les points P-1, P0 et P1 sont relativement proches et disposés à proximité du point P0 correspondant à la valeur consigne à respecter, le point P2 est situé ici plus bas dans la zone de combustion et le point P-2 est situé plus haut dans la zone de combustion. Pour des raisons de lisibilité, on a représenté les points de façon très écartée sans tenir compte des proportions réelles ; par ailleurs le point P2 pour faciliter la lecture est représenté en bas de zone, il pourrait être plus haut.

Ainsi, le point P2 renseigne sur la température TN (ou T2) de sortie des gaz de combustion lorsqu'il n'y a pas combustion, car il est situé au-delà de la fin du front de flamme. La température indiquée est à comparer avec la valeur de température mesurée en entrée du lit de combustion et doit être du même ordre de grandeur sinon cela signifie que la position de la fin du front de flamme est trop basse. Une alarme opérateur peut alors être déclenchée.

Ce point P2 est par exemple situé dans le tiers inférieur de la zone de combustion.

Le point P-2 renseigne sur la température de sortie TY (ou T-2) des gaz de combustion lorsqu'il y a combustion, car il est situé dans une zone du lit où il y a toujours réaction quelles que soient les conditions de fonctionnement (on ne doit cependant pas le placer trop près du début du lit de combustion pour éviter les effets de bord). L'emplacement de ce point dans une zone de combustion va permettre de mesurer la température de tranche, ce qui donne à la fois une information sur les conditions de brûlage auxquelles est soumis le catalyseur (qui dépendent notamment du pourcentage d'oxygène et de la température d'entrée des gaz) mais aussi permet de localiser indirectement mais sûrement le front de flamme comme on le détaille par la suite. Ce point P-2 est par exemple situé dans le tiers supérieur de la zone de combustion. La température de tranche est d'ailleurs l'image de l'oxygène consommé en cas de combustion totale ; c'est donc une information qui peut être utilisée à terme en redondance avec l'information de concentration d'oxygène en entrée. De plus en cas de faible pourcentage de coke, cette température est la seule permettant de constater que la combustion se déroule normalement sur une portion plus faible du lit (dans le cas où la fin du front de flamme se situe entre P-2 et P-1).

Les trois points P-1, P0 et P1 sont utilisés afin de donner une information précise de localisation de fin du front de flamme ou tout autre point du front de flamme choisi comme point de référence. L'emplacement de ces points correspond à la zone où se termine normalement le front de flamme, si le point de référence est le point le plus bas du front de flamme.

On dispose donc, sur ces points de mesure, des capteurs (thermocouples par exemple) ou tout autre moyen de mesure de température (analyseurs infrarouge par exemple).

Ces moyens peuvent être en totalité ou en partie disposés à l'extérieur du lit catalytique, dans le cas avantageux où les informations représentatives peuvent être obtenues sur le gaz sortant, les moyens sont alors à proximité de la paroi par laquelle sort le gaz. C'est le cas lorsque le point de référence est le point bas du front de flamme.

Ces moyens peuvent être en partie situés dans le lit du catalyseur.

En plus ou à la place de cette mesure de température, on peut mesurer la teneur en oxygène avec des analyseurs d'oxygène par exemple, de façon à connaître, par différence avec l'oxygène entrant, la consommation en oxygène.

La figure 4 montre également la disposition des capteurs sur chaque point de mesure, par exemple 3 capteurs P-2, 1 et P-2, 2 et P-2, 3 sont disposés au point P-2 régulièrement sur une section du collecteur central. On mesure donc en ces points une température de tranche ou on calcule une température moyenne de tranche.

Le profil de température du lit de combustion (de la partie instrumentée) est simplement obtenu en faisant la moyenne des températures sur chaque tranche transversale de la manière suivante :

$$Tj = \frac{1}{\sum\limits_{i=1}^{3} Vj,i} \sum\limits_{i=1}^{3} Vj,i * Tj,i$$

Avec :

- Tj, i représente la température du capteur n° i de la tranche j au point Pj
- Vj, i prend la valeur 0 si le capteur Tj,i est hors service, ou 1 si le capteur est en service.
- Tj est la température moyenne de la tranche j.

Cette formule indique simplement que la moyenne est réalisée uniquement sur les capteurs validés.

Un algorithme suffisamment robuste capable de détecter un front de flamme peut se réaliser de la façon suivante à partir des mesures Tj calculées précédemment :

- le niveau de capteur P-2 permet de connaître la température de tranche en un lieu où est présente une combustion totale (zone [38]),

- le niveau de capteur P2 permet de connaître la température en un lieu où est absente la combustion (zone [37],
- le front de flamme sera choisi arbitrairement comme le lieu où la température est égale à une fonction des températures précédentes f (TY, TN) par exemple, de façon simple à la moyenne des deux températures précédentes.

Dans ce cas simple, un algorithme simple permettant de retrouver cette position effectue l'opération suivante : trouver à partir du bas du lit de combustion la première température supéneure à la moyenne des températures T2 et T-2. Puis interpoler entre cette température et la température juste précédente le lieu où la température est égale à la moyenne des températures T2 et T-2. Il suffit ensuite d'ajouter cette valeur à la position physique du capteur de la première température trouvée.

Algorithmiquement :

(initialisation)
(repérage des deux thermocouples entourant la température moyenne)
pour i = 2 à -2
si $Ti > (T-2 + T2) / 2$
$PR = [(Ti - (T-2 + T2) / 2)/(Ti - Ti+1)]* (PTi - PTi-1)$
Avec

    {Ti : Valeur moyenne des thermocouples de la tranche i
    PR : Position (en mètre <0) par rapport à PTi
    PTi : Position (en mètre) du capteur Pi qui mesure Ti par rapport au haut de la zone de combustion}

(estimation de la position du front de flamme par interpolation linéaire, à partir du haut de la zone de combustion)
$LI = PTi + PR$ (en unité SI)

$$LI = (PTi + PR) / \text{(longueur de la zone de combustion)} * 100 \text{ (en \%)}$$

D'autres algorithmes sont envisageables, par exemple on peut évaluer la position fictive de la fin du front de flamme à partir d'une combinaison linéaire de T-2, T-1, T0, T1, T2. De façon générale, la position fictive sera évaluée par une fonction prédéterminée des mesures de températures accessibles Ti.

Le procédé selon l'invention pour le contrôle de la combustion se base donc sur la connaissance d'un point fictif défini par exemple comme présentant une température égale à la moyenne des températures dans la zone de combustion totale et dans la zone d'absence de combustion. On sait que ce point fictif présente une bonne approximation de la localisation réelle du point le plus bas du front de flamme.

On a décrit précédemment le procédé de contrôle à partir du paramètre température, un autre paramètre peut être la consommation en oxygène.

La régulation par modification d'au moins une condition opératoire, et de préférence de la quantité d'oxygène entrant dans la zone de combustion peut ensuite être effectuée si le point fictif calculé précédemment se trouve en dehors de la plage de valeurs tolérée par l'exploitant autour du point P0.

Exemples de scénarii de régulation :

- le point fictif est sur P0:
  Le front de flamme est à la position désirée. On maintient la consigne sur le débit d'$O_2$ constante.
- le point fictif est entre P-1 et P-2 :
  Il y a de l'$O_2$ en excès. On peut soit ramener la fin du front de flamme à P0 en réduisant la quantité d'oxygène, soit la laisser telle quelle si le point fictif est sur P-1 par exemple.
  Selon les plages de valeurs tolérées par l'exploitant, on pourrait même s'autoriser une remontée du front jusqu'au niveau P-2.
- le point fictif est entre P0 et P1 :
  Il n'y a pas assez d'$O_2$. Il faut augmenter le débit d'$O_2$.
- Lorsque le front de flamme est trop haut, on arrive à la limite inférieure de la capacité du régénérateur en contrôle. Il faut signaler le fait par une alarme, et passer éventuellement à un mode dégradé de combustion.
- Lorsque le front de flamme est trop bas, on arrive à la limite supérieure de la capacité du régénérateur. Il faut prévoir une alarme et la possibilité de brûlage temporaire dans une zone suivante, en zone d'oxychloration par exemple.

Donc une fois ce front localisé, la position du point fictif peut être le contrôlée par une régulation classique de type PID (Proportionnelle, Intégrale, Dérivée), ou bien à l'aide d'algorithmes plus performants de type commande par modèle interne et/ou non linéaire utilisant plus judicieusement le modèle de combustion, ou commande prédictive.

On a décrit précédemment un procédé opérant avec un lit annulaire, dont les 2 parois sont cylindriques et coaxiales. On peut tout aussi bien travailler avec un lit conique (1a section en haut du lit est inférieure à celle du bas du lit) ou avec un lit dont la paroi externe est inclinée, tel que décrit dans le brevet US-4 859 643. Par ailleurs, si le gaz circule de la paroi interne vers la paroi externe (opposé au sens décrit précédemment), les moyens de mesure sont disposés de préférence au niveau de la paroi externe.

Lorsque l'installation et le procédé utilisés dans une régénération de catalyseur comporte plusieurs zones de combustion, la mise en oeuvre de la méthode de contrôle ci-dessus décrite est nécessaire sur la dernière zone où a lieu la combustion. On pourrait ainsi par exemple contrôler la combustion dans la deuxième zone de combustion pour le procédé de régénération décrit dans le brevet EP-A-0 378 482.

Néanmoins, on peut tout à fait appliquer ce contrôle pour localiser la fin du front de flamme dans toute zone où a lieu une combustion et ainsi réguler la combustion dans cette zone. De façon très avantageuse, ce repérage est réalisé au niveau de la dernière zone de combustion du procédé comportant une étape de contrôle de combustion.

La présente invention a également pour objet une enceinte mettant en oeuvre le procédé décrit précédemment.

Selon l'invention, l'enceinte pour la régénération d'un catalyseur usé comprend au moins une zone de combustion munie d'au moins deux parois (5a, 5b) entre lesquelles circule le catalyseur en lit mobile, et est munie d'au moins une conduite (4) pour l'introduction d'au moins un gaz contenant de l'oxygène entrant dans le lit mobile par l'une des parois et en ressortant par une autre paroi, elle comprend également une zone de contrôle (FC) de la fin de combustion, située après la fin du front de flamme de la dernière zone de combustion (Z2) munie d'une conduite (11) pour l'introduction d'un gaz de contrôle contenant de l'oxygène et d'au moins un moyen de mesure de la température et/ou de la teneur en oxygène dans le gaz et/ou le catalyseur issu de la zone de contrôle.

De façon avantageuse, lorsque le catalyseur circule dans l'espace annulaire défini entre deux parois cylindriques, un ou plusieurs moyens de mesure sont disposés au niveau de la paroi de la zone de contrôle par laquelle sort le gaz.

Dans une mode de réalisation, la zone de contrôle est située dans la partie inférieure de la dernière zone de combustion.

Dans un autre mode de réalisation, l'enceinte comprend au moins un moyen de séparation (29) disposé entre la zone de contrôle et la dernière zone de combustion de façon à empêcher le passage des gaz et laisser passer le catalyseur, et elle comprend également une conduite (28) pour la sortie du gaz issu de la zone de contrôle, et un ou des moyens de mesure sont disposés sur ladite conduite (28) de sortie.

Un ou des moyens de mesure peuvent également être disposés au niveau de la paroi de la zone de contrôle par laquelle sort le gaz.

L'enceinte selon l'invention comporte avantageusement un dispositif pour la mise en oeuvre la méthode de contrôle par repérage de la position du front de flamme.

Pour mettre en oeuvre le procédé de contrôle précédemment décrit, il est proposé un dispositif pour le contrôle de la combustion de la matière carbonée d'un catalyseur lors de sa régénération dans une enceinte de régénération comportant au moins une zone de combustion, ladite zone étant munie d'au moins une ouverture pour l'entrée du catalyseur et d'au moins une ouverture pour son évacuation, ledit catalyseur s'écoulant en lit mobile dans la zone de combustion entre au moins 2 parois, l'une des parois permettant l'introduction dans le lit d'un gaz chaud contenant de l'oxygène amené par une ouverture de l'enceinte de régénération, le gaz ayant traversé le lit sort par l'autre paroi et est évacué par une ouverture de l'enceinte. Ledit dispositif comporte :

- au moins un moyen de mesure de la température TY de la partie de la zone où il y a combustion,
- au moins un moyen de mesure de la température TN de la partie de la zone où il n'y a pas combustion,
- au moins 2 moyens de mesure des températures Tj du lit situés aux points Pj entre les moyens de mesure de TY et TN, et situés de part et d'autre d'un niveau P0 dans la zone de combustion qui correspond à la localisation d'un point de référence du front de flamme à obtenir dans les conditions normales de fonctionnement et dit valeur consigne de référence,
- un moyen pour le calcul de la position d'un point fictif correspondant à un point du front de flamme, à partir des mesures de température Tj, TY, TN obtenues aux points Pj, et pour la comparaison de ladite position avec la valeur consigne de référence,
- un moyen pour la régulation des conditions opératoires de la zone de combustion relié au moyen de calcul précédent et aux moyens pour modifier au moins une condition opératoire.

De préférence, le(s) moyen(s) de mesure de TN est situé dans le tiers inférieur de la zone de combustion. Avantageusement, le(s) moyen(s) de mesure de TY est situé dans les deux tiers supérieurs de la zone de combustion.

Il est intéressant de prévoir que plusieurs moyens de mesure de température sont disposés au même niveau de mesure, conduisant ainsi à une température moyenne de tranche.

De même, avantageusement, lorsque les 2 parois sont cylindriques et coaxiales, définissant un lit annulaire de catalyseur, le gaz entrant par la paroi externe et étant collecté dans un collecteur défini par la paroi interne, des moyens de mesure de température sont disposés dans ce collecteur.

De même, avantageusement, lorsque les 2 parois sont cylindriques et coaxiales, définissant un lit annulaire de catalyseur, le gaz entrant dans la zone de combustion à partir du volume défini par la paroi interne, passant à travers la paroi interne pour traverser le lit et en ressortant par la paroi externe, des moyens de mesure de température sont disposés au niveau de la paroi externe.

On peut également envisager que des moyens de mesure de température sont répartis dans le lit de catalyseur.

Un dispositif particulièrement avantageux avec détection du point le plus bas du front de flamme comporte :

- au moins un moyen de mesure de la température TY de la partie de la zone où il y a combustion au niveau de la paroi par laquelle sort le gaz,
- au moins un moyen de mesure de la température TN de la partie de la zone où il n'y a pas combustion au niveau de la paroi par laquelle sort le gaz,
- au moins 2 moyens de mesure des températures Tj du lit situés aux points Pj entre les moyens de mesure de TY et TN au niveau de la paroi par laquelle sort le gaz, et situés de part et d'autre d'un niveau P0 dans la zone de combustion qui correspond au point le plus bas du front de flamme à obtenir dans les conditions normales de fonctionnement et dit valeur consigne de référence,
- un moyen pour le calcul de la position d'un point fictif correspondant à un point du front de flamme, à partir des mesures de température Tj, TY, TN obtenues aux points Pj, et pour la comparaison de ladite position avec la valeur consigne de référence,
- un moyen pour la régulation des conditions opératoires de la zone de combustion relié au moyen de calcul précédent et aux moyens pour modifier au moins une condition opératoire.

Les moyens pour modifier au moins une condition opératoire sont des vannes par exemple. Les températures Tj sont celles de la tranche au niveau de mesure Pj.

Afin de repérer une température représentative de ce qui se passe sur une tranche, plusieurs (par exemple trois selon la figure 4) capteurs sont régulièrement disposés afin d'obtenir à la fois :

- une redondance d'informations nécessaire car le test et le remplacement de capteurs ne peuvent se faire en fonctionnement,
- une information sur le profil des écoulements à l'intérieur du régénérateur (déséquilibre, bouchage de jambes, passages préférentiels).

Dans ce cas, il faut qu'il y ait plusieurs moyens de mesure par tranche et plusieurs niveaux de mesure. Ainsi dans le sens longitudinal, on a des "colonnes" de moyens de mesure.

Afin de détecter la présence de passages préférentiels, on peut calculer sur chacune des trois "colonnes" de thermocouples la somme des écarts par rapport à la moyenne des températures de tranche de ces thermocouples, soit :

$$POSi = \frac{1}{\sum\limits_{j=-2}^{2} Vj,i} \sum\limits_{j=-2}^{2} Vj,i * (Tj,i - Tj)$$

Avec : POSi : représente le décalage moyen par rapport à la moyenne des mesures des thermocouples de tranche situés en position i.

**Revendications**

1.  Procédé de régénération d'un catalyseur usé incluant une combustion de la matière carbonée, en au moins une étape de combustion dans laquelle le catalyseur est mis au contact d'au moins un gaz contenant de l'oxygène, dans des conditions opératoires déterminées, procédé **caractérisé en ce que** le catalyseur ayant subi toutes les étapes de combustion est, dans une étape de contrôle, mis au contact d'au moins un gaz dit de contrôle dans des conditions plus sévères que celles des étapes de combustion, et que l'étape de contrôle se déroule avec une consommation en oxygène inférieure à 10 % de l'oxygène entrant avec ledit gaz et **en ce que** les températures du gaz et/ou du catalyseur introduit et du gaz et/ou du catalyseur sortant dans l'étape de contrôle et/ou les teneurs en oxygène du gaz introduit et du gaz sortant dans l'étape de contrôle sont mesurées, comparées, et s'il existe une différence supérieure aux variations admissibles, au moins une condition opératoire d'au moins une étape de combustion est modifiée de façon à corriger ladite différence.

**2.** Procédé selon l'une des revendications précédentes, **caractérisé en ce que** le catalyseur est un catalyseur de reformage ou un catalyseur de production d'aromatiques.

**3.** Procédé selon l'une des revendications 1 ou 2, **caractérisé en ce que** la température reste sensiblement constante lors de l'étape de contrôle.

**4.** Procédé selon l'une des revendications précédentes, **caractérisé en ce que** le gaz de contrôle contient de l'oxygène en quantité au moins égale à la quantité d'oxygène la plus grande introduite dans une étape de combustion et/ou sa température est supérieure à celle des gaz introduits dans les étapes de combustion.

**5.** Procédé selon l'une des revendications précédentes, **caractérisé en ce que**, après passage sur le catalyseur, le gaz de contrôle sort du procédé indépendamment des autres gaz issus de l'étape de combustion ou en mélange avec au moins un gaz issu d'au moins une étape de combustion.

**6.** Procédé selon l'une des revendications précédentes, **caractérisé en ce que** le catalyseur est sous forme de lit mobile.

**7.** Procédé selon l'une des revendications précédentes, **caractérisé en ce que** le catalyseur est soumis à au moins une étape de combustion se déroulant dans au moins une zone de combustion, dans laquelle est introduit au moins un gaz contenant de l'oxygène, et que le catalyseur est soumis à une étape de contrôle de la fin de la combustion dans une zone de contrôle séparée de la zone de combustion ou de la dernière zone de combustion de manière à laisser passer le catalyseur et empêcher le passage des gaz, le gaz de contrôle étant introduit dans la zone de contrôle et extrait de ladite zone de contrôle, la mesure de la température et/ou de la teneur en oxygène étant effectuée sur ledit gaz extrait.

**8.** Procédé selon l'une des revendications précédentes, **caractérisé en ce que** le catalyseur est soumis à au moins une étape de combustion se déroulant dans au moins une zone de combustion, dans laquelle est introduit au moins un gaz contenant de l'oxygène, et que le catalyseur est soumis à une étape de contrôle de la fin de la combustion dans une zone de contrôle qui se situe dans la partie inférieure de la dernière zone de combustion, le gaz de contrôle étant introduit au niveau de la zone de contrôle et la mesure de la température et/ou de la teneur en oxygène étant effectuée sur le gaz sortant au niveau de ladite zone.

**9.** Procédé selon l'une des revendications 1 à 5, **caractérisé en ce que** le catalyseur est sous forme de lit fixe.

**10.** Procédé de régénération selon l'une des revendications 1 à 8, dans lequel le catalyseur s'écoule en lit mobile descendant entre au moins 2 parois dans une zone de combustion, et est traversé par un gaz chaud contenant de l'oxygène qui entre dans le lit par l'une des parois et en ressort par l'autre paroi, zone dans laquelle se développe un front de flamme à profil incliné dont le point le plus haut est au niveau de la paroi par laquelle entre le gaz et au niveau de l'entrée du catalyseur dans la zone, et dont le point le plus bas est au niveau de la paroi par laquelle sort le gaz, procédé dans lequel on contrôle la combustion de la matière carbonée au niveau de l'une au moins des zones où il y a combustion de la façon suivante : on mesure au moins un paramètre XY de la zone où il y a combustion totale et au moins un paramètre XN de la zone où il n'y a pas de combustion, on attribue à au moins un point de référence choisi à proximité ou sur le front de flamme, à obtenir dans des conditions normales de fonctionnement, une fonction paramétrique incluant XY et XN, la localisation dudit point dans les conditions normales de fonctionnement constituant une valeur consigne de référence, et on calcule la position, à partir de points de mesure situés de part et d'autre de la valeur consigne de référence, d'un point fictif calculé à partir de la fonction paramétrique, puis on compare ladite position à la valeur consigne de référence, et, s'il existe une différence, on modifie au moins une condition opératoire de façon à réduire ou éliminer ladite différence.

**11.** Procédé selon la revendication 1 à 10, **caractérisé en ce que** le point le plus bas du front de flamme est situé à partir du haut de la zone de combustion à une distance d'au plus 98 % de la hauteur totale de la zone de combustion.

**12.** Procédé selon l'une des revendications 10 ou 11, **caractérisé en ce** dans des conditions normales de fonctionnement, la localisation du point le plus bas du front de combustion constitue la valeur consigne de référence.

**13.** Procédé selon la revendication 10, **caractérisé en ce que** le lit mobile a une forme annulaire.

**14.** Procédé selon l'une des revendications 10 à 13, **caractérisé en ce qu'**on contrôle la combustion en modifiant la quantité d'oxygène entrant dans la zone de combustion.

**15.** Procédé selon l'une des revendications 10 à 14, **caractérisé en ce qu'**on contrôle la combustion en modifiant le débit de catalyseur.

**16.** Procédé selon l'une des revendications 10 à 15, **caractérisé en ce que** le catalyseur passe dans plusieurs zones de combustion, et que le procédé est mis en oeuvre dans la dernière zone où a lieu la combustion.

**17.** Enceinte pour la régénération d'un catalyseur usé comprenant au moins une zone de combustion munie d'au moins deux parois (5a, 5b) entre lesquelles circule le catalyseur en lit mobile, et munie d'au moins une conduite (4) pour l'introduction d'au moins un gaz contenant de l'oxygène entrant dans le lit mobile par l'une des parois et en ressortant par une autre paroi, qui comprend également une zone (FC) située à la fin de la dernière zone de combustion (Z2) munie d'une conduite (11) pour l'introduction d'un gaz contenant de l'oxygène et

- l'enceinte comporte également au moins un moyen de mesure de la température du gaz et/ou du catalyseur introduit et du gaz et/ou du catalyseur sortant et/ou au moins un moyen de mesure de la teneur en oxygène du gaz introduit et du gaz sortant de ladite zone (FC),
- et ladite enceinte comportant des moyens pour modifier au moins une condition opératoire d'au moins une zone de combustion s'il existe une différence supérieure aux variations admissibles entre les températures du gaz et/ou du catalyseur introduit dans la zone (FC) et du gaz et/ou du catalyseur sortant de la zone (FC) et/ou les teneurs en oxygène du gaz introduit dans la zone (FC) et du gaz sortant de la zone (FC), les variations admissibles étant une différence de température n'excédant pas 3% ou une différence de teneur en oxygène inférieure à 10%

**18.** Enceinte selon la revendication 17, **caractérisée en ce que** la zone de contrôle est située dans la partie inférieure de la dernière zone de combustion.

**19.** Enceinte selon l'une des revendications 17 ou 18, **caractérisée en ce que** le catalyseur circule dans l'espace annulaire défini entre deux parois cylindriques, et qu'un ou plusieurs moyens de mesure sont disposés au niveau de la paroi de la zone de contrôle par laquelle sort le gaz.

**20.** Enceinte selon la revendication 17, **caractérisée en ce qu'**elle comprend au moins un moyen de séparation (29) disposé entre la zone de contrôle et la demière zone de combustion de façon à empêcher le passage des gaz et laisser passer le catalyseur, et qu'elle comprend également une conduite (28) pour la sortie du gaz issu de la zone de contrôle, et qu'un ou des moyens de mesure sont disposés sur ladite conduite (28) de sortie.

**21.** Enceinte selon l'une des revendications 17 ou 18, **caractérisée en ce qu'**elle comprend au moins un moyen de séparation (29) disposé entre la zone de contrôle et la dernière zone de combustion de façon à empêcher le passage des gaz et laisser passer le catalyseur, et qu'elle comprend également une conduite (28) pour la sortie du gaz issu de la zone de contrôle, et qu'un ou des moyens de mesure sont disposés au niveau de la paroi de la zone de contrôle par laquelle sort le gaz.

**22.** Enceinte selon l'une des revendications 17 à 21, **caractérisée en ce qu'**elle comporte également, au niveau d'au moins l'une des zones où il y a combustion, un dispositif comportant :

- au moins un moyen de mesure de la température TY de la partie de la zone où il y a combustion,
- au moins un moyen de mesure de la température TN de la partie de la zone où il n'y a pas combustion,
- au moins 2 moyens de mesure des températures Tj du lit situés aux points Pj entre les moyens de mesure de TY et TN, et situés de part et d'autre d'un niveau P0 dans la zone de combustion qui correspond à la localisation d'un point de référence du front de flamme à obtenir dans les conditions normales de fonctionnement et dit valeur consigne de référence,
- un moyen pour le calcul de la position d'un point fictif correspondant à un point du front de flamme, à partir des mesures de température Tj, TY, TN obtenues aux points Pj, et pour la comparaison de ladite position avec la valeur consigne de référence,

- un moyen pour la régulation des conditions opératoires de la zone de combustion relié au moyen de calcul précédent et aux moyens pour modifier au moins une condition opératoire.

**23.** Enceinte selon la revendication 22, **caractérisée en ce que** le moyen de mesure de TN est situé dans le tiers inférieur de la zone de combustion.

**24.** Enceinte selon l'une des revendications 22 ou 23, **caractérisée en ce que** le moyen de mesure de TY est situé dans les deux tiers supérieurs de la zone de combustion.

**25.** Enceinte selon l'une des revendications 22 à 24, **caractérisée en ce que** plusieurs moyens de mesure de température sont disposés au même niveau de mesure, conduisant ainsi à une température moyenne de tranche.

**26.** Enceinte se!on l'une des revendications 22 à 24, **caractérisée en ce que** les 2 parois sont cylindriques et coaxiales, définissant un lit annulaire de catalyseur, le gaz entrant par la paroi externe et étant collecté dans un collecteur défini par la paroi interne, des moyens de mesure de température sont disposés dans ce collecteur.

**27.** Enceinte selon l'une des revendications 22 à 26, **caractérisée en ce que** les 2 parois sont cylindriques et coaxiales, définissant un lit annulaire de catalyseur, le gaz entrant dans la zone de combustion à partir du volume défini par la paroi interne, passant à travers la paroi interne pour traverser le lit et en ressortant par la paroi externe, des moyens de mesure de température sont disposés au niveau de la paroi externe.

**28.** Enceinte selon l'une des revendications 22 à 27, **caractérisée en ce que** des moyens de mesure de température sont répartis dans le lit de catalyseur.

**29.** Enceinte selon l'une des revendications 22 à 28, **caractérisée en ce que** la position du point fictif est contrôlé par un algorithme de type PID, commande par modèle interne, commande prédictive, ou commande non linaire.

**30.** Enceinte selon l'une des revendications 22 à 29, **caractérisée en ce qu'**il comporte :

- au moins un moyen de mesure de la température TY de la partie de la zone où il y a combustion au niveau de la paroi par laquelle sort le gaz,
- au moins un moyen de mesure de la température TN de la partie de la zone où il n'y a pas combustion au niveau de la paroi par laquelle sort le gaz,
- au moins 2 moyens de mesure des températures Tj du lit situés aux points Pj entre les moyens de mesure de TY et TN au niveau de la paroi par laquelle sort le gaz, et situés de part et d'autre d'un niveau P0 dans la zone de combustion qui correspond au point le plus bas du front de flamme à obtenir dans les conditions normales de fonctionnement et dit valeur consigne de référence,
- un moyen pour le calcul de la position d'un point fictif correspondant à un point du front de flamme, à partir des mesures de température Tj, TY, TN obtenues aux points Pj, et pour la comparaison de ladite position avec la valeur consigne de référence,
- un moyen pour la régulation des conditions opératoires de la zone de combustion relié au moyen de calcul précédent et aux moyens pour modifier au moins une condition opératoire.

**31.** Enceinte selon l'une des revendications 17-21 dans laquelle la conduite (11) introduit dans la zone (FC) un gaz ayant une teneur en oxygène au moins égale à la quantité d'oxygène la plus grande introduite dans une étape de combustion ou ayant une température au mois égale à la température la plus élevée des gaz introduits en combustion.

**32.** Enceinte selon l'une des revendications 17-21 et 31 dans laquelle la conduite (11) introduit un gaz comprenant au moins une partie du gaz issu de la dernière étape de combustion additionnée d'oxygène.

**Patentansprüche**

**1.** Verfahren zur Regenerierung eines verbrauchten Katalysators, dass eine Verbrennung des kohlenstoffhaltigen Materials in wenigstens einer Verbrennungsstufe umfasst, in der der Katalysator mit wenigstens einem sauerstoffhaltigen Gas unter festgelegten Betriebsbedingungen kontaktiert wird, wobei das Verfahren **dadurch gekennzeichnet ist, dass** der Katalysator, welcher allen Verbrennungsstufen unterlag, in einer Regelungsstufe mit wenigstens einem sogenannten Reguliergas unter strengeren Bedingungen kontaktiert wird als denen der Verbrennungsstufen und dass die Regelungsstufe mit einem Sauerstoffverbrauch von weniger als 10% des mit dem Gas eintretenden Sauerstoffs abläuft und dadurch, dass die Temperaturen des eingeführten Gases und/oder Katalysators und des austretenden Gases und/oder Katalysators in der Regelungsstufe und/oder die Sauerstoffgehalte des eingeführten Gases und des austretenden Gases in der Regelungsstufe gemessen, verglichen und, wenn es eine Differenz oberhalb der zulässigen Variationen gibt, unter wenigstens einer Betriebsbedingung wenigstens einer Verbrennungsstufe derart modifiziert werden, dass diese Differenz korrigiert wird.

2. Verfahren nach einem der vorhergehenden Ansprüche, **dadurch gekennzeichnet, dass** der Katalysator ein Reformierungskatalysator oder ein Katalysator zur Erzeugung von Aromaten ist.

3. Verfahren nach einem der Ansprüche 1 oder 2, **dadurch gekennzeichnet, dass** die Temperatur im wesentlichen während der Regelungsstufe konstant bleibt.

4. Verfahren nach einem der vorhergehenden Ansprüche, **dadurch gekennzeichnet, dass** das Reguliergas Sauerstoff in einer Menge enthält, die wenigstens gleich der höchsten in die Verbrennungsstufe eingeführten Sauerstoffmenge ist und/oder dessen Temperatur höher als jene der in die Verbrennungsstufen eingeführten Gase ist.

5. Verfahren nach einem der vorhergehenden Ansprüche, **dadurch gekennzeichnet, dass** das Regulierungsgas nach Passieren über den Katalysator das Verfahren unabhängig von den anderen aus der Verbrennungsstufe stammenden Gasen oder in Mischung mit wenigstens einem aus wenigstens einer Verbrennungsstufe stammenden Gas verlässt.

6. Verfahren nach einem der vorhergehenden Ansprüche, **dadurch gekennzeichnet, dass** der Katalsator in Form eines beweglichen Bettes vorliegt.

7. Verfahren nach einem der vorhergehenden Ansprüche, **dadurch gekennzeichnet, dass** der Katalysator wenigstens einer Verbrennungsstufe unterzogen wird, die in wenigstens einer Verbrennungszone abläuft, in die wenigstens ein sauerstoffhaltiges Gas eingeführt wird und dass der Katalysator einer Stufe zur Regelung des Verbrennungsendes in einer Regelungszone unterzogen wird, die von der Verbrennungszone oder der letzten Verbrennungszone derart getrennt ist, dass man den Katalysator passieren lässt und den Durchgang der Gase verhindert, wobei das Reguliergas in die Regelungszone eingeführt wird und von der Regelungszone extrahiert wird, wobei die Messung der Temperatur und/oder des Sauerstoffgehaltes an dem extrahierten Gas durchgeführt wird.

8. Verfahren nach einem der vorhergehenden Ansprüche, **dadurch gekennzeichnet, dass** der Katalysator wenigstens einer Verbrennungsstufe unterzogen wird, die in wenigstens einer Verbrennungszone abläuft, in der wenigstens ein sauerstoffhaltiges Gas eingeführt wird und dass der Katalysator einer Stufe zur Regelung des Verbrennunsendes in einer Regelungszone unterzogen wird, die im unteren Teil der Verbrennungszone angeordnet ist, wobei das Reguliergas auf dem Niveau der Regelungszone eingeführt wird und die Messung der Temperatur und/oder des Sauersotffgehaltes an dem Gas durchgeführt wird, das auf dem Niveau dieser Zone austritt.

9. Verfahren nach einem der Ansprüche 1 bis 5, **dadurch gekennzeichnet, dass** der Katalysator in Form eines Festbettes vorliegt.

10. Verfahren zur Regenerierung nach einem der Ansprüche 1 bis 8, bei dem der Katalysator im aufsteigenden beweglichen Bett zwischen zwei Wänden in einer Verbrennungszone fließt und von einem heißen sauerstoffhaltigen Gas durchquert wird, das in das Bett durch eine der Wände eintritt und daraus durch die andere Wand wieder austritt, wobei dies eine Zone ist, in der sich eine Flammenfront mit schrägem Profil entwickelt, deren heißester Punkt auf dem Niveau der Wand ist, durch die Gas eintritt und auf dem Niveau Katalysatoreintritts in die Zone und deren niedrigster Punkt auf dem Niveau der Wand ist, durch welche das Gas austritt, wobei in dem Verfahren die Verbrennung des kohlenstoffhaltigen Materials auf dem Niveau wenigstens einer der Zonen geregelt wird, wo es eine Verbrennung gibt und zwar in folgender Weise: man misst wenigstens einen Parameter XY der Zone, wo es eine vollständige Verbrennung gibt, und wenigstens ein Parameter XN der Zone wo es keine Verbrennung gibt; man ordnet wenigstens einen Referenzpunkt zu, der in der Nähe oder auf der Flammenfront gewählt ist, um unter normalen Betriebsbedingungen eine XY und XN einschließende Parameterfunktion zu erhalten, wobei die Lokalisierung dieses Punktes unter den normalen Betriebsbedingungen einen vorgeschriebenen Referenzwert ergibt, und man berechnet die Position, von der Messpunkte, die auf beiden Seiten des vorgeschriebenen Referenzwertes liegen, einen fiktiven Punkt, der ausgehend von der Parameterfunktion berechnet ist, und dann vergleicht man diese Position mit dem vorgeschriebenen Referenzwert, und wenn es eine Differenz gibt, modifiziert man wenigstens eine Betriebsbedingung derart, dass diese Differenz vermindert oder eliminiert wird.

11. Verfahren nach einem der Ansprüche 1 bis 10, **dadurch gekennzeichnet, dass** der niedrigste Punkt der Flammenfront ausgehend von der Höhe der Verbrennungszone bei einem Abstand von höchstens 98% der Gesamthöhe der Verbrennungszone angeordnet ist.

12. Verfahren nach einem der Ansprüche 10 oder 11, **dadurch gekennzeichnet, dass** bei normalen Betriebsbedingungen die Lokalisierung des niedrigsten Punktes der Flammenfront den vorgeschriebenen Referenzwert bildet.

13. Verfahren nach Anspruch 10, **dadurch gekennzeichnet, dass** das bewegliche Bett eine Ringform hat.

14. Verfahren nach einem der Ansprüche 10 bis 13, **dadurch gekennzeichnet, dass** man die Verbrennung regelt, indem man die in Verbrennungszone eintretenden Sauerstoff modifiziert.

15. Verfahren nach einem der Ansprüche 10 bis 14, **dadurch gekennzeichnet, dass** man die Verbrennung unter Modifizierung des Katalysatordurchsatzes reguliert.

16. Verfahren nach einem der Ansprüche 10 bis 15, **dadurch gekennzeichnet, dass** der Katalysator in mehreren Verbrennungszonen passiert und dass das Verfahren in der letzten Zone durchgeführt wird, wo die Verbrennung stattfindet.

17. Gefäß für die Regenerierung eines verbrauchten Katalysators, dass wenigstens eine Verbrennungszone umfasst, die mit wenigstens zwei Wänden (55a, 5b) ausgerüstet ist, zwischen denen der Katalysator im beweglichen Bett zirkuliert und mit wenigstens einer Leitung (4) zur Einführung wenigstens eines sauerstoffhaltigen Gases ausgerüstet ist, dass in das bewegliche Bett durch wenigstens eine der Wände eintritt und daraus durch wenigstens eine andere Wand austritt, welches Gefäß gleichermaßen eine Zone (FC) umfasst, die am Ende der ersten Verbrennungszone (Z2) angeordnet ist, welche mit einer Leitung (11) zur Einführung sauerstoffhaltigen Gases ausgerüstet, ist und

- das Gefäß gleichermaßen wenigstens ein Mittel zur Messung der Temperatur des eingeführten Gases und/ oder Katalysators und des austretenden Gases und/oder Katalysators und/oder wenigstens ein Mittel zur Messung des Sauerstoffgehaltes des eingeführten Gases und des aus dieser Zone (FC) austretenden Gases umfasst,

- und das Gefäß Mittel zum Modifizieren wenigstens einer Betriebsbedingung wenigstens einer Verbrennungszone bei Vorhandensein einer Differenz über den zulässigen Variationen unter den Temperaturen des in die diese Zone (FC) eingeführten Gases und/oder Katalysators und des aus dieser Zone austretenden Gases und/oder Katalysators und/oder der Sauerstoffgehalte des in diese Zone (FC) eingeführten Gases und des aus dieser Zone (FC) austretenden Gases umfasst, wobei die zulässigen Variationen eine Temperaturdifferenz sind, die 3% nicht überschreitet, oder eine Sauerstoffgehaltsdifferenz von weniger als 10%.

18. Gefäß nach Anspruch 17, **dadurch gekennzeichnet, dass** die Regelungszone im unteren Teil der letzten Verbrennungszone angeordnet ist.

19. Gefäß nach einem der Ansprüche 17 oder 18, **dadurch gekennzeichnet, dass** der Katalysator in dem ringförmigen, zwischen den beiden zylindrischen Wänden definierten Raum zirkuliert und dass ein oder mehrere Messmittel auf dem Niveau der Wand der Regelungszone angeordnet sind, durch die das Gas austritt.

20. Gefäß nach Anspruch 17, **dadurch gekennzeichnet, dass** es wenigstens ein Trennmittel (29) umfasst, dass zwischen der Regelungszone und der letzten Verbrennungszone derart angeordnet ist, dass der Durchgang der Gase verhindert wird und man den Katalysator passieren lässt und dass das Gefäß auch eine Leitung (28) zum Austritt des die Regelungszone verlassenden Gases umfasst und dass eines oder mehrere Messmittel auf der Austrittsleitung (28) angeordnet sind.

21. Gefäß nach einem der Ansprüche 17 oder 18 **dadurch gekennzeichnet, dass** es wenigstens ein Trennmittel (29) umfasst, das zwischen der Regelungszone und der letzten Verbrennungszone derart angeordnet ist, dass der Durchgang der Gase verhindert wird und man den Katalysator passieren lässt und dass das Gefäß auch eine Leitung (28) zum Austritt des aus der Regelungszone stammenden Gases umfasst und dass eines oder mehrere Mittel auf dem Niveau der Wand der Regelungszone angeordnet ist, durch die das Gas austritt.

22. Gefäß nach einem der Ansprüche 17 bis 21, **dadurch gekennzeichnet, dass** es gleicherrmaßen auf dem Niveau wenigstens einer der Zonen, wo die Verbrennung erfolgt, eine Vorrichtung umfasst, welche umfasst:

   - wenigstens ein Mittel zur Messung der Temperatur TY des Teils der Zone, wo die Verbrennung erfolgt,

   - wenigstens ein Mittel zur Messung der Temperatur TN des Teils der Zone, wo keine Verbrennung erfolgt,

   - wenigstens zwei Mittel zur Messung der Temperatur Tj, die auf Punkten Pj zwischen den Mitteln zur Messung von TY und TN angeordnet sind und beiderseits eines Niveaus P0 in der Verbrennungszone, das der Lokalisierung des Referenzpunktes der Flammenfront entspricht, um unter normalen Betriebsbedingungen den vorgeschriebenen Referenzwert zu erhalten,

   - -ein Mittel zur Berechnung der Position eines fiktiven Punktes, der einem Flammenfrontpunkt entspricht ausgehend von den Temperaturmessungen Tj, TY, TN, die von den Punkten Pj erhalten, sind und für den Vergleich dieser Position mit dem vorgeschriebenen Referenzwert,

   - ein Mittel zur Regulierung der Betriebsbedingungen der Verbrennungszone, das mit dem obigen Berechnungsmittel und mit den Mitteln zur Modifizierung wenigstens einer Betriebsbedingung verbunden ist.

23. Gefäß nach Anspruch 22, **dadurch gekennzeichnet, dass** das Mittel zur Messung von TN im unteren Drittel der Verbrennungszone angeordnet ist.

24. Gefäß nach einem der Ansprüche 22 oder 23, **dadurch gekennzeichnet, dass** das Messmittel von TY in den oberen beiden Dritteln der Verbrennungszone angeordnet ist.

25. Gefäß nach einem der Ansprüche 22, bis 24, **dadurch gekennzeichnet, dass** mehrere Mittel zur Messung der Temperatur auf dem gleichen Messniveau angeordnet sind, was so zu einer mittleren Abschnittstemperatur führt.

26. Gefäß nach einem der Ansprüche 22 bis 24, **dadurch gekennzeichnet dass** die beiden Wände zylindrisch und koaxial sind, wobei sie ein ringförmiges Katalysatorbett definieren, wobei das Gas durch die äußere Wand eintritt und in einem durch die innere Wand definierten Kollektor gesammelt wird, und dass Mittel zur Messung der Temperatur im Kollektor angeordnet sind.

27. Gefäß gemäß einem der Ansprüche 22 bis 26, **dadurch gekennzeichnet, dass** die beiden Wände zylindrisch und koaxial sind, wobei sie ein ringförmiges Katalysatorbett definieren, wobei das Gas in die Verbrennungszone aus dem durch die innere Wand definierten Volumen eintritt, entlang der inneren Wand passiert, um dass Bett zu durchqueren und das daraus durch äußere Wand auszutreten, und dass die Mittel zur Messung der Temperatur auf dem Niveau der äußeren Wand angeordnet sind.

28. Gefäß nach einem der Ansprüche 22 bis 27, **dadurch gekennzeichnet, dass** die Mittel zur Messung der Temperatur in dem Katalysatorbett verteilt sind.

29. Gefäß nach einem der Ansprüche 22 bis 28, **dadurch gekennzeichnet, dass** die Position des fiktiven Punktes durch einen Algorithmus vom Typ PID, Steuerung durch ein internes Modell, Vorhersagesteuerung oder nichtlineare Steuerung geregelt werden.

30. Gefäß nach einem der Ansprüche 22 bis 29, **dadurch gekennzeichnet, dass** es umfasst:

   - wenigstens ein Mittel zur Temperatur TY des Teils des Zone, wo die Verbrennung auf dem Niveau der Wand stattfindet, durch die das Gas austritt,

   - wenigstens ein Mittel zur Messung der Temperatur TN des Teils der Zone, wo es keine Verbrennung gibt auf dem Niveau der Wand, durch die das Gas austritt,

- wenigstens zwei Mittel zur Messung der Temperaturen Tj des Bettes, dass auf den Punkten Pj zwischen den Mitteln zur Messung von TY und TN auf dem Niveau der Wand angeordnet sind, durch die das Gas austritt, und beiderseits eines Niveaus P0 in der Verbrennungszone angeordnet sind, das dem niedrigsten Punkt der Flammenfront entspricht, der unter normalen Betriebsbedingungen und diesen vorgeschriebene Referenzwert zu erhalten ist,

- ein Mittel zur Berechnung der Position eines fiktiven Punktes, der einem Flammenfrontpunkt entspricht, ausgehend von Temperaturmessungen Tj, TY, TN, erhalten an Punkten Pj und zum Vergleich der Position mit dem vorgeschriebenen Referenzwert,

- ein Mittel zur Regulierung der Betriebsbedingungen der Verbrennungszone, das mit wenigstens einem obigen Berechnungsmittel und mit Mitteln zum Modifizieren wenigstens einer Betriebsbedingung verbunden ist.

31. Gefäß nach einem der Ansprüche 17 bis 21, bei dem die Leitung (11) in die Zone (FC) ein Gas mit einem Sauerstoffgehalt einführt, der wenigstens gleich der größten in einer Verbrennungsstufe eingeführten Sauerstoffmenge ist, oder mit einer Temperatur, die wenigstens gleich der höchsten Temperatur zur Verbrennung eingeführten Gase ist.

32. Gefäß nach einem der Ansprüche 17 bis 21 und 31, in dem die Leitung (11) ein Gas einführt, das wenigstens ein Teil des aus der letzten mit Sauerstoff versetzten Verbrennungsstufe stammenden Gases umfasst.

**Claims**

1. A process for regenerating a used catalyst including combustion of carbonized material, in at least one combustion step in which the catalyst is brought into contact with at least one oxygen-containing gas, under predetermined operating conditions, the process being **characterized in that** the catalyst which has undergone all of the combustion steps is, in a monitoring and control step, brought into contact with at least one oxygen-containing gas, called monitoring and control gas, under conditions which are more severe than those of the combustion steps, and **in that** the monitoring and control step is carried out with an oxygen consumption of less than 10% of the oxygen entering with said gas, and **in that** the temperatures of the gas and/or the catalyst introduced and the gas and/or catalyst leaving the monitoring and control step and/or the oxygen contents of the gas introduced and the gas leaving the monitoring and control step are measured, compared, and if there is a difference which is larger than allowable variations, at least one operating condition of at least one combustion step is modified to correct said difference.

2. A process according to claim 1, **characterized in that** the catalyst is a reforming catalyst or a catalyst for the production of aromatic compounds.

3. A process according to claim 1 or claim 2, **characterized in that** the temperature remains substantially constant during the monitoring and control step.

4. A process according to any one of the preceding claims, **characterized in that** the monitoring and control gas contains oxygen in a quantity at least equal to the largest quantity of oxygen introduced into a combustion step and/or its temperature is higher than that of the gases introduced into the combustion steps.

5. A process according to any one of the preceding claims, **characterized in that**, after passage over the catalyst, the monitoring and control gas leaves the process independently of the other gases leaving the combustion step or mixed with at least one gas leaving at least one combustion step.

6. A process according to any one of the preceding claims, **characterized in that** the catalyst is in the form of a moving bed.

7. A process according to any one of the preceding claims, **characterized in that** the catalyst undergoes at least one combustion step carried out in at least one combustion zone, into which at least one oxygen-containing gas is introduced, and the catalyst undergoes a step for monitoring and controlling the end of combustion in a monitoring and control zone separate from the combustion zone or from the last combustion zone so as to allow the catalyst to pass and to prevent the passage of gas, the monitoring and control gas being introduced into the monitoring and control zone and extracted from said monitoring and control zone, the temperature and/or oxygen content of the extracted gas being measured.

**8.** A process according to any one of the preceding claims, **characterized in that** the catalyst undergoes at least one combustion step carried out in at least one combustion zone, into which at least one oxygen-containing gas is introduced, and the catalyst undergoes a step for monitoring and controlling the end of combustion in a monitoring and control zone which is located in the lower portion of the last combustion zone, the monitoring and control gas being introduced into the monitoring and control zone, and the temperature and/or oxygen content of the gas leaving said zone being measured.

**9.** A process according to any one of claims 1 to 5, **characterized in that** the catalyst is in the form of a fixed bed.

**10.** A regeneration process according to any one of claims 1 to 8, in which the catalyst flows in a descending moving bed between at least two walls in a combustion zone, and is traversed by a hot oxygen-containing gas which enters the bed via one of the walls and leaves via the other wall, in which zone a flame front with an inclined profile develops, the highest point of which is on the wall via which the gas enters at the level where the catalyst enters the zone, and the lowest point of which is on the wall via which the gas leaves, in which process combustion of the carbonized material in at least one of the zones where combustion takes place is monitored and controlled as follows: at least one parameter XY of the zone in which combustion is complete is measured and at least one parameter XN is measured in a zone in which no combustion occurs, at least one reference point selected close to or on the flame front obtained under normal operating conditions is attributed with a parametric function including XY and XN, the location of said point under normal operating conditions constituting a set reference value, and the position of a dummy point calculated from the parametric function is calculated from measuring points located either side of the reference value, then said position is compared with the set reference point and, if a difference exists, at least one operating condition is modified so as to reduce or eliminate said difference.

**11.** A process according to any one of claims 1 to 10, **characterized in that** the lowest point of the flame front is located a distance of at most 98% of the total height of the combustion zone from the top of the combustion zone.

**12.** A process according to claim 10 or claim 11, **characterized in that** under normal operating conditions, the location of the lowest point of the combustion front constitutes the set reference value.

**13.** A process according to claim 10, **characterized in that** the moving bed is annular in shape.

**14.** A process according to any one of claims 10 to 13, **characterized in that** combustion is monitoring and controlled by modifying the quantity of oxygen entering the combustion zone.

**15.** A process according to any one of claims 10 to 14, **characterized in that** combustion is monitoring and controlled by modifying the flow rate of the catalyst.

**16.** A process according to any one of claims 10 to 15, **characterized in that** the catalyst passes through a plurality of combustion zones, and **in that** the process is carried out in the last zone in which combustion occurs.

**17.** A vessel for regenerating used catalyst comprising at least one combustion zone provided with at least two walls (5a, 5b) between which the catalyst circulates as a moving bed, and provided with at least one conduit (4) for introducing at least one oxygen-containing gas entering the moving bed via one of the walls and leaving via another wall, also comprising a zone (FC) located at the end of the last combustion zone (Z2), provided with a conduit (11) for introducing an oxygen-containing gas and

- the vessel comprises at least one mean for measuring the temperature of the gas and/or the catalyst introduced and the gas and/or the catalyst leaving and/or at least one mean for measuring the oxygen contents of the gas introduced and the gas leaving said zone (FC), and
- said vessel comprises means for modifying at least one operating condition of at least one combustion zone of there is a difference which is larger than the allowable variations between the temperatures of the gas and/or the catalyst introduced in the zone (FC) and the gas/or the catalyst leaving the zone (FC) and/or the oxygen contents of the gas introduced in the zone (FC) and the gas leaving the zone (FC), the allowable variations being a temperature difference that dues not exceed 3% or a difference in oxygen content that is less than 10%.

**18.** A vessel according to claim 17, **characterized in that** the monitoring and control zone is located in the lower portion of the last combustion zone.

**19.** A vessel according to claim 17 or claim 18, **characterized in that** the catalyst circulates in the annular space defined by two cylindrical walls, and **in that** one or more measuring means are located in the wall of the monitoring and control zone via which the gas leaves.

**20.** A vessel according to claim 17, **characterized in that** it comprises at least one separation means (29) located between the monitoring and control zone and the last combustion zone so as to prevent the passage of gas and allow passage of the catalyst, and **in that** it also comprises an outlet conduit (28) for gas to leave the monitoring and control zone, and **in that** one or more measuring means is located in said outlet conduit (28).

**21.** A vessel according to claim 17 or 18, **characterized in that** it comprises at least one separation means (29) located between the monitoring and control zone and the last combustion zone to prevent the passage of gas and allow passage of the catalyst, and **in that** it also comprises a conduit (28) for gas to leave the monitoring and control zone, and **in that** one or more measuring means is located in the wall of the monitoring and control zone via which the gas leaves.

**22.** A vessel according to any one of claims 17 to 21, **characterized in that** it also comprises, in at least one of the zones in which combustion occurs, an apparatus comprising:

- at least one means for measuring the temperature TY of a portion of the zone where combustion has occurred;
- at least one means for measuring the temperature TN on a portion of the zone where combustion has not occurred;
- at least two means for measuring temperatures Tj of the bed located at points Pj between measuring means TY and TN, and located either side of a level P0 in the combustion zone which corresponds to the location of a reference point for the flame front to obtain, under normal operating conditions, a set reference value;
- a means for calculating the position of a dummy point corresponding to a point on the flame front, from temperature measurements Tj, TY, TN obtained at points Pj, and for comparing said position with the set reference value;
- a means for regulating the operating conditions of the combustion zone connected to the calculation means described above and to means for modifying at least one operating condition.

**23.** A vessel according to claim 22, **characterized in that** the means for measuring TN is located in the lower third of the combustion zone.

**24.** A vessel according to claim 22 or claim 23, **characterized in that** the means for measuring TY is located in the upper two thirds of the combustion zone.

**25.** A vessel according to any one of claims 22 to 24, **characterized in that** a plurality of temperature measuring means is located at the same measuring level, leading to an average section temperature.

**26.** A vessel according to any one of claims 22 to 24, **characterized in that** the two walls are cylindrical and co-axial, defining an annular catalyst bed, the gas entering via the outer wall and being collected in a collector defined by the inner wall, the temperature measuring means being located in this collector.

**27.** A vessel according to any one of claims 22 to 26, **characterized in that** the two walls are cylindrical and co-axial, defining an annular bed of catalyst, the gas entering the combustion zone from the volume defined by the inner wall, passing via the inner wall to traverse the bed and leaving via the outer wall, the temperature measuring means being located in the outer wall.

**28.** A vessel according to any one of claims 22 to 27, **characterized in that** the temperature measuring means are distributed in the catalyst bed.

**29.** A vessel according to any one of claims 22 to 28, **characterized in that** the position of the dummy point is monitoring and controlled by a PID type algorithm, an internal control model, a predictive control model or a non linear control model.

30. A vessel according to any one of claims 22 to 29, **characterized in that** it comprises:

- at least one means for measuring the temperature TY of a portion of the zone where combustion has occurred on the wall via which the gas leaves;
- at least one means for measuring the temperature TN of a portion of the zone where combustion has not occurred on the wall via which the gas leaves;
- at least two means for measuring temperatures Tj of the bed located at points Pj between measuring means TY and TN, on the wall via which the gas leaves, and located either side of a level P0 in the combustion zone which corresponds to the lowest point of the flame front to obtain, under normal operating conditions, a set reference value;
- a means for calculating the position of a dummy point corresponding to a point on the flame front, from temperature measurements Tj, TY, TN obtained at points Pj, and for comparing said position with the set reference value;
- a means for regulating the operating conditions of the combustion zone connected to the calculation means described above and to means for modifying at least one operating condition.

31. A vessel according to any one of claims 17 to 21, wherein the conduit (11) introduces in the zone (FC) a gas having a quantity of oxygen at least equal to the largest quantity of oxygen introduced in the combustion step or having a temperature at least equal to the highest temperature of the gases introduced into the combustion step.

32. A vessel according to any one of claims 17 to 21 and 32, wherein the conduit (11) introduces a gas comprising at least a portion of the gas from the last combustion step with added oxygen.

## FIG.1

FIG.2

**FIG.4**

**FIG.3**